# EUROPÄISCHE PATENTSCHRIFT

(11) **EP 2 630 884 B1**
(45) Veröffentlichungstag und Bekanntmachung des Hinweises auf die Patenterteilung: **14.05.2014**
(21) Anmeldenummer: 12156538.6
(22) Anmeldetag: 22.02.2012
(51) Int. Cl.: A43B 17/00, A43B 13/18, A43B 3/00, B29D 35/12

(54) **Verfahren zum Herstellen eines anatomisch geformten Rohlings für eine Schuheinlage und Schuheinlage**
Method for producing an anatomically moulded blank for a shoe insert and shoe insert
Procédé de fabrication d'une ébauche formée de manière anatomique pour une semelle de chaussure et semelle de chaussure

(43) Veröffentlichungstag der Anmeldung: 28.08.2013
(73) Patentinhaber: Schelchen GmbH, 15711 Königs Wusterhausen (DE)
(72) Erfinder: Bürger, Tilo, Dipl.-Ing., 15754 Heidesee, OT Wolzig (DE)
(74) Vertreter: Bittner, Thomas L.

(56) Entgegenhaltungen:
- WO-A1-2008/132478
- DE-U1-202007 018 343
- DE-U1-202009 009 725
- US-A1- 2010 031 531
- US-A1- 2011 283 560

## Beschreibung

Die Erfindung betrifft ein Verfahren zum Herstellen eines anatomisch geformten Rohlings für eine Schuheinlage sowie eine Schuheinlage.

### Hintergrund der Erfindung

Schuheinlagen, die über einen anatomisch geformten Rohling sowie eine hierauf angeordnete Deckschicht verfügen, werden auch als Fußbettung bezeichnet. Der anatomisch geformte Rohling bildet eine Fußsohlenanatomie nach. Es ist bekannt, derartige Rohlinge aus unterschiedlichen Materialen herzustellen, zum Beispiel Kunststoff oder Korkmaterial. Der Rohling erstreckt sich bei der Schuheinlage häufig vom Fersenbereich bis in den Mittelfußbereich. Auf dem Rohling ist eine ein- oder mehrlagige Deckschicht gebildet, die im Wesentlichen auf die Ausdehnung des Rohlings begrenzt sein kann oder sich über die gesamte Fußsohle erstreckt. Die mit der Fußsohle in Kontakt kommende Deckfläche ist beispielsweise aus einem Ledermaterial. Aber auch andere Materialien wie Textil können die Fußauflagefläche bildend verwendet werden.

Im Dokument US 2011/0283560 A1 ist ein Sohlenaufbau für einen Schuh offenbart, bei dem eine Mittelsohle mittels Spritzgießen hergestellt wird.

Das Dokument US 2010/003 153 1 A1 offenbart eine Innensohle mit Bereichen unterschiedlicher Flexibilität. Die Innensohle kann herausnehmbar in einem Schuh angeordnet sein. Zur Herstellung ist ein Spritzgießprozess nutzbar. Mit Hilfe des Spritzgießens kann die Innensohle in einem Spritzgießwerkzeug mit Abschnitten unterschiedlicher Flexibilität hergestellt werden. Hierzu werden die unterschiedlichen Materialien über jeweils zugeordnete Spritzdüsen in das Werkzeug eingebracht.

Im Dokument DE 20 2009 009 725 U1 ist ein Rohling zur Herstellung von orthopädischen Einlagen oder Fußbettungen beschrieben. Der Rohling ist ein Verbund aus einem Unterbau und einem Überbau, wobei der Unterbau bei einer Stärke von maximal 3mm wenigstens bereichsweise der üblichen Fußform dreidimensional angepasst ist und den Verbund wenigstens Bereichsweise versteift. Der Überbau besteht aus einem fräsbaren Material mit dämpfender und polsternder Wirkung.

Schuhartikel sind im Dokument WO 2008/13247 A1 offenbart. Eine Sohle weist wenigstens eine obere Schicht auf, die mit dem Fuß in Kontakt kommt. Die obere Schicht besteht aus zwei oder mehr Materialien mit unterschiedlichem Druckwiderstand oder unterschiedlicher Dichte.

Das Dokument DE 20 2007 018 343 U1 bezieht sich auf eine Schaumkunststoff-Schuheinlegesohle. Bei der Herstellung werden mehrere Komponenten gemischt. Die geschäumte Einlegesohle weist mehrere Bereiche unterschiedliche Materialhärte auf.

### Zusammenfassung der Erfindung

Aufgabe der Erfindung ist es, ein verbessertes Verfahren zum Herstellen eines anatomisch geformten Rohlings für eine Schuheinlage sowie eine Schuheinlage anzugeben, mit denen die individuelle Anpassbarkeit der Schuheinlage an unterschiedliche Funktionalitäten ermöglicht ist. Darüber hinaus soll das Herstellungsverfahren auch die Massenfertigung von Schuheinlagen unterstützen.

Diese Aufgabe wird erfindungsgemäß durch ein Verfahren zum Herstellen eines anatomisch geformten Rohlings für eine Schuheinlage nach dem unabhängigen Anspruch 1 sowie eine Schuheinlage nach dem unabhängigen Anspruch 8 gelöst. Vorteilhafte Ausgestaltungen der Erfindung sind Gegenstand von abhängigen Unteransprüchen.

Die Erfindung umfasst den Gedanken eines Verfahrens zum Herstellen eines anatomisch geformten Rohlings für eine Schuheinlage, wobei der Rohling mittels Mehrkomponenten-Spritzgießen als Kunststoffrohling aus mehreren verschiedenen Kunststoffmaterialien in einer formgebenden Werkzeugkavität hergestellt und nach dem Abkühlen aus der Werkzeugkavität entfernt wird.

Nach einem weiteren Aspekt ist eine Schuheinlage mit einem anatomisch geformten und mittels Mehrkomponenten-Spritzgießen aus mehreren verschiedenen Kunststoffmaterialien hergestellten Rohling und einer auf dem Rohling angeordneten Deckschicht geschaffen, auf der eine Fußauflagefläche gebildet ist.

Die Erfindung sieht vor, den Kunststoffrohling für die Schuheinlage mittels Mehrkomponenten-Spritzgießen in einer Werkzeugkavität herzustellen, deren innere Oberfläche die anatomische Formgebung für den Rohling bereitstellt. Das Mehrkomponenten-Spritzgießverfahren kann zum Beispiel als sogenanntes 2K-Spritzgießen (zwei Komponenten-Spritzgießen) ausgeführt werden. Es werden hierbei zwei oder mehr unterschiedliche Kunststoffmaterialien, die vorzugsweise miteinander verträglich sind, in der Werkzeugkavität eingebracht, um auf diese Weise nacheinander oder zumindest teilweise auch gleichzeitig unterschiedliche Abschnitte des Kunststoffrohlings auszubilden. Das Herstellen des Kunststoffrohlings Stück für Stück aus unterschiedlichen Spritzgießmaterialien wird beispielsweise dadurch realisiert, dass sogenannte Schieber, die zunächst Bereiche der formgebenden Werkzeugkavität ausfüllen und so für eine Eintritt von Kunststoff in diese Bereiche sperren, später herausgezogen werden, wenn ein zweites oder weitere Spritzgießmaterialien in der Werkzeugkavität eingebracht werden sollen.

Es ergibt sich insgesamt die Möglichkeit, die Rohlinge für die Schuheinlage aus mehreren Kunststoffmaterialien, die unterschiedliche Eigenschaften aufweisen können, herzustellen, wobei dieses in einer einzigen formgebenden Werkzeugkavität ausführbar ist, ohne dass es notwendig wäre, die Werkzeugkavität zwischendurch zu öffnen, um ein zunächst hergestelltes Halbzeug für den Rohling aus der Werkzeugkavität zu entnehmen und dann in eine andere Werkzeugkavität zu verbringen, wo dann weitere Abschnitte des herzustellenden Rohlings ausbildbar wären. Trotz unterschiedlicher Kunststoffmaterialien, die gemeinsam bei dem Kunststoffrohling zum Einsatz kommen, kann der Herstellungsprozess wahlweise in ein und derselben formgebenden Werkzeugkavität ausgeführt werden.

Da mit Hilfe der vorgeschlagenen Technologien beliebige Abschnitte des Rohlings aus unterschiedlichen Kunststoffmaterialien hergestellt werden können, ergibt sich eine große Flexibilität bei der individuellen Anpassung von Rohlingen für unterschiedliche Anwendungszwecke oder Arten von Schuheinlagen. Beispielsweise können Rohlinge für verschiedene Schuheinlagen hergestellt werden, die für Personen mit unterschiedlichem Gewicht und unterschiedlichen Fußtyp vorgesehen sind. Auch können für unterschiedliche funktionelle Zwecke individuell angepasste Kunststoffrohlinge hergestellt werden, zum Beispiel ein Rohling für eine Schuheinlage in Businessschuhen einerseits und ein Rohling für eine Schuheinlage für einen Sportschuh andererseits.

Es können zum Beispiel die folgenden Kunststoffmaterialien zum Einsatz kommen: thermoplastisches Polyethylen (TPE), thermoplastisches Polyurethan (TPU), Polypropylen (PP) und / oder Polyethylen (PE).

Der Kunststoffrohling wird aus mehreren verschiedenen Kunststoffmaterialien hergestellt, die wenigstens zwei unterschiedliche Materialhärten aufweisen. Die unterschiedlichen Grade an Materialhärte ergeben sich nach dem Abkühlen der Kunststoffmaterialien, sodass die verschiedenen Materialhärten dann bei dem aus der Werkzeugkavität entformten Rohling gegeben sind. Das Ausbilden von Rohlingsabschnitten aus verschiedenen Materialien, die über unterschiedliche Materialhärten verfügen, ermöglicht eine ganz individuelle Anpassung an Nutzer und / oder Funktionalitäten. So können zum Beispiel Rohlinge, die ansonsten von gleicher anatomischer Formgebung sind, mit unterschiedlichen Kunststoffmaterialbereichen hergestellt werden, die sich hinsichtlich der Materialhärte unterscheiden, zum Beispiel für eine Sportschuheinlage, um individuell angepasste Schuheinlagen sportartspezifisch oder für den Nutzungszweck (Training oder Wettkampf) bereitzustellen.

Der Kunststoffrohling wird mit wenigstens einem versteifenden Rohlingsabschnitt hergestellt, wobei die Materialhärte des Kunststoffmaterials in dem wenigstens einen versteifenden Rohlingsabschnitt höher ist als in hierzu benachbarten Abschnitten des Kunststoffrohlings. Der wenigstens eine versteifende Rohlingsabschnitt erstreckt sich schräg zur Längsachse des Kunststoffrohlings von einer Längsseite zur gegenüberliegenden Längsseite des Rohlings. In einer Ausgestaltung ist ein X oder Y-förmiges Versteifungselement mit dem versteifenden Rohlingsabschnitt hergestellt. Die verwendeten Materialien können beispielsweise Polypropylen oder Polyethylen sein, die in unterschiedlichen Materialdichten ausgeführt werden können.

Eine vorteilhafte Ausführungsform der Erfindung sieht vor, dass der Kunststoffrohling mit wenigstens einem bei Druckbelastung elastisch nachgebenden Rohlingsabschnitt hergestellt wird, wobei die Materialhärte des Kunststoffmaterials in dem wenigstens einen elastisch nachgebenden Rohlingsabschnitt kleiner ist als in hierzu benachbarten Abschnitten des Kunststoffrohlings ist. Hierdurch können verschiedene Druckbelastungszonen geschaffen werden, die sich optimal auf die Trageeigenschaften des Nutzers auswirken.

Bevorzugt sieht eine Fortbildung der Erfindung vor, dass der bei Druckbelastung elastisch nachgebende Rohlingsabschnitt zumindest in einem der folgenden Bereiche gebildet wird: ein Rohlingsrand, ein Pelottenabschnitt und ein Fersenpolsterabschnitt. Der elastisch nachgebende Rohlingsabschnitt entlang des Randes erstreckt sich um den Rohling umlaufend oder in Teilbereichen hiervon, wobei zusammenhängende und / oder unterbrochene Randabschnitte vorgesehen sein können, die aus dem elastisch nachgebenden Material bestehen.

Bei einer vorteilhaften Ausgestaltung der Erfindung kann vorgesehen sein, dass zwischen einem Rohlingsabschnitt, welcher aus einem Kunststoffmaterial besteht, und einem anderen Rohlingsabschnitt, welcher benachbart zu dem Rohlingsabschnitt und aus einem anderen Kunststoffmaterial gebildet wird, wenigstens im Bereich einer Rohlingsdeckfläche ein im Wesentlichen glatter Übergang hergestellt wird. Ergänzend kann der im Wesentlichen glatte Übergang auch auf der Unterseite des Rohlings ausgebildet sein. Ein im Wesentlichen glatter Übergang zwischen Rohlingsabschnitten, die aus unterschiedlichen Kunststoffmaterialien bestehen, ist dadurch gebildet, dass die äußere Oberfläche in dem Übergangsbereich, wo die beiden Kunststoffmaterialien aufeinander stoßen, glatt ist, also insbesondere im Wesentlichen ohne Spalt oder Absatz. Es können so fließende Übergänge zwischen den unterschiedlichen Kunststoffmaterialien hergestellt werden, die trotzdem ein angenehmes Tragegefühl im Schuh unterstützen.

Eine Weiterbildung der Erfindung kann vorsehen, dass der Kunststoffrohling in der formgebenden Werkzeugkavität wenigstens abschnittsweise aus einem mikroporös geschäumten Kunststoff hergestellt wird. Das mikroporöse Aufschäumen von Kunststoffmaterialien in der Werkzeugkavität erfolgt dadurch, dass eine Kunststoffschmelze eines zuvor plastifizierten Kunststoffmaterials unter Druck- und / oder Temperaturänderung in die Werkzeugkavität eingebracht wird, sodass dort ein der Kunststoffschmelze vorher zugegebenes Treibmittel zur Blasenbildung führt. Es können chemische und / oder physikalische Treibmittel zum Einsatz kommen, wobei insbesondere Wasser ein kostengünstiges und umweltfreundliches Treibmittel ist. Der Zusatz des Treibmittels in der Kunststoffschmelze kann beispielsweise dadurch ausgeführt werden, dass zunächst ein Trägermaterial mit einem oder mehreren Treibmitteln beladen wird und dann das so geladene Trägermaterial in das Kunststoffgrundmaterial eindosiert wird, sei es vor und / oder während der Plastifizierung.

Eine bevorzugte Weiterbildung der Erfindung sieht vor, dass der Kunststoffrohling, mit Ausnahme von zumindest einem wahlweise gebildeten Pelottenabschnitt und / oder zumindest einem wahlweise gebildeten Fersenpolster, durchgehend mit einer im Wesentlichen gleich bleibenden Schichtdicke hergestellt wird. Auch wenn bei dem Kunststoffrohling Abschnitte mit unterschiedlichen Eigenschaften hergestellt werden sollen, insbesondere hinsichtlich der Materialhärte, sieht diese Ausgestaltung vor, dass die Schichtdicke des Rohlings, zumindest außerhalb der wahlweise gebildeten Bereiche, im Wesentlichen gleichbleibend ist, was den Tragekomfort der Einlage im Schuh unterstützt. Die gleichbleibende Schichtdicke beträgt vorzugsweise höchstens etwa 2,9 mm.

### Beschreibung bevorzugter Ausführungsbeispiele der Erfindung

Die Erfindung wird im Folgenden anhand von bevorzugten Ausführungsbeispielen unter Bezugnahme auf eine Figur näher erläutert.

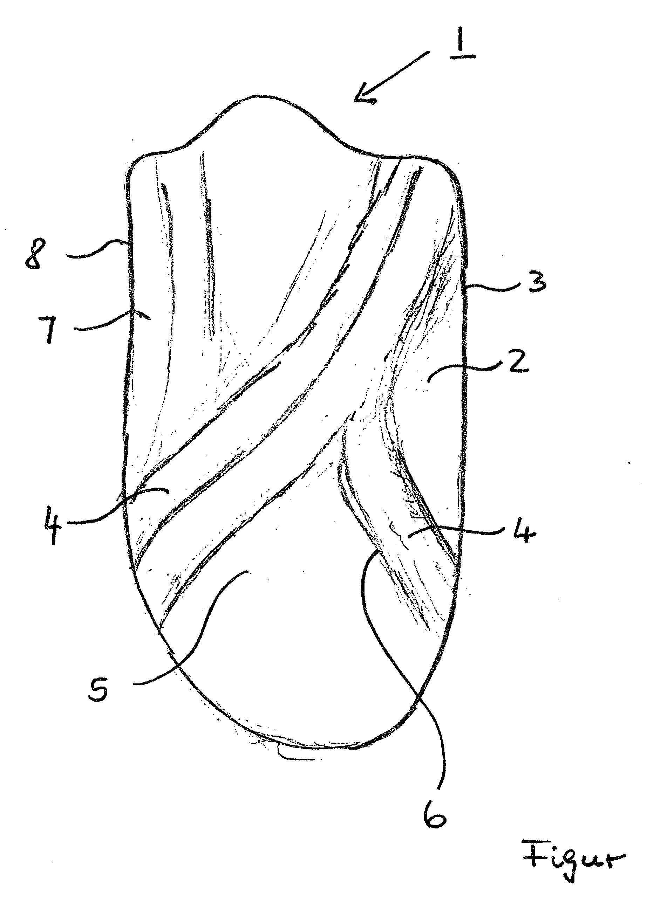

Die einzige Figur zeigt einen Rohling 1 aus Kunststoff für eine Schuheinlage, welcher anatomisch geformt ist, von oben. Ausdruck der anatomischen Formgebung ist insbesondere das Vorsehen einer Längsgewölbestütze 2 auf einer inneren Längsseite 3 des Rohlings 1.

Die mechanische Stabilität des Rohlings insgesamt wird unterstützt durch einen versteifenden Rohlingsabschnitt 4, welcher in der dargestellten Ausführungsform mit einer Y-Form gebildet ist. Die Y- und X-Form ermöglicht es bei dem gezeigten Ausführungsbeispiel auch, die Längsgewölbestütze 2 zu unterstützen. Im Bereich des versteifenden Rohlingsabschnittes 4 besteht der Rohling aus einem Kunststoffmaterial, welches einen höheren Härtegrad aufweist, als ein anderes Kunststoffmaterial, welches zur Herstellung von Rohlingsabschnitten 5 verwendet wurde, die außerhalb des versteifenden Rohlingsabschnittes 4 und benachbart hierzu gebildet sind. Diese Funktionalität dient typischerweise der Bildung von Stabilitätsbrücken, einer bewegungsphysiologischen Verwringungselastizität und / oder einer anschmiegsamen Randreflektion zur Unterstützung der Fußstruktur.

Flächenübergänge 6 zwischen den unterschiedlichen Kunststoffmaterialien des versteifenden Rohlingsabschnittes 4 und der benachbarten Rohlingsabschnitte 5 sind im Wesentlichen glatt, sodass auf der in der Figur gezeigten Deckfläche eine glatte Oberfläche hergestellt ist.

Ein Rohlingsrandabschnitt 7, der sich entlang der äußeren Längsseite 8 des Rohlings 1 erstreckt, ist aus einem Kunststoffmaterial, welches elastisch nachgebend ist. Hierdurch wird bei der Nutzung des Rohlings 1 in einer Schuheinlage im Schuh vermieden, dass in diesem Bereich Druck auf den Fuß des Nutzers ausgeübt wird.

Der gezeigte Rohling 1 ist somit aus insgesamt mindestens zwei unterschiedlichen Kunststoffmaterialien hergestellt, die sich hinsichtlich ihrer Materialhärte unterscheiden. Die Herstellung eines solchen Rohlings 1 erfolgt mit Hilfe des Mehrkomponenten-Spritzgießen. Die unterschiedlichen Kunststoffmaterialien werden hierbei nacheinander und / oder zeitgleich in eine formgebende Werkzeugkavität eingebracht, deren innere Oberfläche der anatomischen Formgebung des Rohlings 1 nachempfunden ist. Nachdem schließlich alle eingebrachten Kunststoffmaterialien abgekühlt sind, wird der Rohling 1 aus der Werkzeugkavität herausgenommen. Er kann dann mit einer Deckschicht versehen werden, die ein- oder mehrlagig ausgeführt ist, um die Schuheinlage herzustellen.

In dieser oder anderen Ausführungsformen können unterschiedliche thermoplastische Polymermaterialien zum Einsatz kommen, zum Beispiel thermoplastisches Polyethylen (TPE), thermoplastisches Polyurethan (TPU), Polypropylen (PP) und / oder Polyethylen (PE).

Die in der vorstehenden Beschreibung, den Ansprüchen und der Figur offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Verfahren zum Herstellen eines anatomisch geformten Rohlings für eine Schuheinlage, wobei der Rohling mittels Mehrkomponenten-Spritzgießen als Kunststoffrohling (1) aus mehreren verschiedenen Kunststoffmaterialien, die im abgekühlten Zustand wenigstens zwei unterschiedliche Materialhärten aufweisen, in einer formgebenden Werkzeugkavität hergestellt und nach dem Abkühlen aus der Werkzeugkavität entfernt wird, dadurch **ge-kennzeichnet**, dass der Kunststoffrohling (1) mit wenigstens einem versteifenden Rohlingsabschnitt (4) hergestellt wird, welcher sich schräg zur Längsachse und von einer Längsseite zu einer gegenüberliegenden Längsseite des Kunststoffrohlings (1) erstreckt, wobei die Materialhärte des Kunststoffmaterials in dem wenigstens einen versteifenden Rohlingsabschnitt (4) höher ist als in hierzu benachbarten Abschnitten (5) des Kunststoffrohlings (1).

2. Verfahren nach Anspruch 1, **dadurch gekennzeichnet, dass** mit dem versteifenden Rohlingsabschnitt (4) ein X- oder ein Y-förmiges Versteifungselement gebildet ist.

3. Verfahren nach Anspruch 2, **dadurch gekennzeichnet, dass** der Kunststoffrohling (1) mit wenigstens einem bei Druckbelastung elastisch nachgebenden Rohlingsabschnitt (7) hergestellt wird, wobei die Materialhärte des Kunststoffmaterials (1) in dem wenigstens einen elastisch nachgebenden Rohlingsabschnitt (7) kleiner ist als in hierzu benachbarten Abschnitten des Kunststoffrohlings (1) ist.

4. Verfahren nach Anspruch 3, **dadurch gekennzeichnet, dass** der bei Druckbelastung elastisch nachgebende Rohlingsabschnitt zumindest in einem der folgenden Bereiche gebildet wird: ein Rohlingsrand, ein Pelottenabschnitt und ein Fersenpolsterabschnitt.

5. Verfahren nach mindestens einem der Ansprüche, **dadurch gekennzeichnet, dass** zwischen einem Rohlingsabschnitt, welcher aus einem Kunststoffmaterial besteht, und einem anderen Rohlingsabschnitt, welcher benachbart zu dem Rohlingsabschnitt und aus einem anderen Kunststoffmaterial gebildet wird, wenigstens im Bereich einer Rohlingsdeckfläche ein im Wesentlichen glatter Übergang (6) hergestellt wird.

6. Verfahren nach mindestens einem der Ansprüche, **dadurch gekennzeichnet, dass** der Kunststoffrohling (1) in der formgebenden Werkzeugkavität wenigstens abschnittsweise aus einem mikroporös geschäumten Kunststoff hergestellt wird.

7. Verfahren nach mindestens einem der vorangehenden Ansprüche, dadurch **gekenn-zeichnet**, dass der Kunststoffrohling (1), mit Ausnahme von zumindest einem wahlweise gebildeten Pelottenabschnitt und / oder zumindest einem wahlweise gebildeten Fersenpolster, durchgehend mit einer im Wesentlichen gleich bleibenden Schichtdicke hergestellt wird.

8. Schuheinlage, mit einem anatomisch geformten und mittels Mehrkomponenten-Spritzgießen aus mehreren verschiedenen Kunststoffmaterialien hergestellten Rohling (1) und einer auf dem Rohling (1) angeordneten Deckschicht, auf der eine Fußauflagefläche gebildet ist, wobei die mehreren verschiedenen Kunststoffmaterialien im abgekühlten Zustand wenigstens zwei unterschiedliche Materialhärten aufweisen und wobei der Kunststoffrohling (1) wenigstens einen versteifenden Rohlingsabschnitt (4) aufweist, welcher sich schräg zur Längsachse und von einer Längsseite zu einer gegenüberliegenden Längsseite des Kunststoffrohlings (1) erstreckt, wobei die Materialhärte des Kunststoffmaterials in dem wenigstens einen versteifenden Rohlingsabschnitt (4) höher ist als in hierzu benachbarten Abschnitten (5) des Kunststoffrohlings (1).

## Claims

1. A method for producing an anatomically shaped blank for an insole, wherein the blank is produced in a mould cavity by means of multi-component injection moulding in the form of a plastic blank (1) of several different plastic materials that in the cooled state have at least two different material hardnesses, and wherein the blank is removed from the mould cavity after the cooling process, **characterized in that** the plastic blank (1) is produced with at least one reinforcing blank section (4) that extends transverse to the longitudinal axis and from one longitudinal side to an opposite longitudinal side of the plastic blank (1), wherein the material hardness of the plastic material in the at least one reinforcing blank section (4) is greater than in sections (5) of the plastic blank (1) situated adjacent thereto.

2. The method according to Claim 1, **characterized in that** an X-shaped or a Y-shaped reinforcing element is formed with the reinforcing blank section (4).

3. The method according to Claim 2, **characterized in that** the plastic blank (1) is produced with at least one blank section (7) that elastically yields under a pressure load, wherein the material hardness of the plastic material (1) in the at least one elastically yielding blank section (7) is lower than in sections of the plastic blank (1) situated adjacent thereto.

4. The method according to Claim 3, **characterized in that** the blank section that elastically yields under a pressure load is realized at least in one of the following regions: a blank edge, a pelotte section and a heel pad section.

5. The method according to at least one of the preceding claims, **characterized in that** an essentially smooth transition (6) is produced between a blank section that consists of one plastic material and another blank section that is situated adjacent to the blank section and consists of a different plastic material at least in the region of a blank cover surface.

6. The method according to at least one of the preceding claims, **characterized in that** the plastic blank (1) is at least sectionally produced of a microporous foamed plastic in the mould cavity.

7. The method according to at least one of the preceding claims, **characterized in that** the plastic blank (1) is consistently produced with an essentially constant layer thickness with the exception of at least one optionally formed pelotte section and/or at least one optionally formed heel pad.

8. An insole with an anatomically shaped blank (1) that is produced of several different plastic materials by means of multi-component injection moulding and a cover layer that is arranged on the blank (1) and on which a foot support surface is formed, wherein the several different plastic materials have in the cooled state at least two different material hardnesses, wherein the plastic blank (1) features at least one reinforcing blank section (4) that extends transverse to the longitudinal axis and from one longitudinal side to an opposite longitudinal side of the plastic blank (1), and wherein the material hardness of the plastic material in the at least one reinforcing blank section (4) is greater than in sections (5) of the plastic blank (1) situated adjacent thereto.

## Revendications

1. Procédé de fabrication d'une ébauche à conformation anatomique pour semelle intérieure de chaussure, dans lequel l'ébauche est fabriquée dans une cavité d'outillage lui donnant sa forme par moulage par injection de composants multiples sous forme d'une ébauche en plastique (1) faite de plusieurs matières plastiques différentes qui, en état refroidi, présentent au moins deux duretés de matériau différentes et est retirée de la cavité d'outillage après refroidissement, **caractérisé en ce que** l'ébauche en plastique (1) est fabriquée avec au moins une section d'ébauche raidisseuse (4) qui s'étend transversalement à l'axe longitudinal et depuis un côté longitudinal jusqu'à un côté longitudinal opposé de l'ébauche en plastique (1), la dureté de matériau de la matière plastique étant plus élevée dans l'au moins une section d'ébauche raidisseuse (4) que dans les sections voisines (5) de l'ébauche en plastique (1).

2. Procédé selon la revendication 1, **caractérisé en ce qu'**un élément raidisseur en forme de X ou de Y est constitué par la section d'ébauche raidisseuse (4).

3. Procédé selon la revendication 2, **caractérisé en ce que** l'ébauche en plastique (1) est fabriquée avec une section d'ébauche élastiquement résiliente sous sollicitation par pression (7), la dureté de matériau de la matière plastique (1) dans l'au moins une section d'ébauche élastiquement résiliente (7) étant plus faible que dans les sections voisines de l'ébauche en plastique (1).

4. Procédé selon la revendication 3, **caractérisé en ce que** la section d'ébauche élastiquement résiliente sous sollicitation par pression est constituée au moins dans une des zones suivantes : un bord de l'ébauche, une section de pelote et une section de rembourrage de talon.

5. Procédé selon une des revendications précédentes, **caractérisé en ce que**, entre une section d'ébauche composée de matière plastique et une autre section d'ébauche qui est voisine de la section d'ébauche et est composée d'une autre matière plastique, au moins au niveau d'une surface de recouvrement de l'ébauche, une transition sensiblement lisse (6) est réalisée.

6. Procédé selon une des revendications précédentes, **caractérisé en ce que** l'ébauche en plastique (1) est fabriquée sensiblement par sections à partir d'une matière plastique en mousse microporeuse dans la cavité d'outillage lui donnant sa forme.

7. Procédé selon une des revendications précédentes, **caractérisé en ce que** l'ébauche en plastique (1), à l'exception d'au moins une section de pelote conformée au choix et/ou d'au moins un rembourrage de talon conformé au choix, est fabriquée en continu avec une épaisseur de couche sensiblement homogène.

8. Semelle intérieure de chaussure comportant une ébauche (1) de conformation anatomique et faite de plusieurs matières plastiques différentes et d'une couche de recouvrement disposée sur l'ébauche (1), sur laquelle est constituée une surface d'appui de pied, dans laquelle les plusieurs matières plastiques présentent, en état refroidi, au moins deux duretés de matériau différentes et l'ébauche en plastique (1) présente au moins une section d'ébauche raidisseuse (4) qui s'étend transversalement à l'axe longitudinal et depuis un côté longitudinal jusqu'à un côté longitudinal opposé de l'ébauche en plastique (1), la dureté de matériau de la matière plastique étant plus élevée dans l'au moins une section d'ébauche raidisseuse (4) que dans les sections voisines (5) de l'ébauche en plastique (1).
